# EUROPÄISCHE PATENTSCHRIFT

(11) **EP 1 900 182 B1**
(45) Veröffentlichungstag und Bekanntmachung des Hinweises auf die Patenterteilung: **09.07.2014**
(21) Anmeldenummer: 06777333.3
(22) Anmeldetag: 14.06.2006
(51) Int. Cl.: H04M 3/22

(54) **VERFAHREN UND EINRICHTUNG ZUR ÜBERPRÜFUNG DES ZUSCHALTENS EINER POSITIVEN VERSORGUNGSSPANNUNG AUF EINE MEHRERE ADERN UMFASSENDE TEILNEHMERANSCHLUSSLEITUNG**
METHOD AND DEVICE FOR VERIFYING SWITCHING ON OF A POSITIVE DISTRIBUTION VOLTAGE IN A USER CONNECTION CABLE COMPRISING SEVERAL STRANDS
PROCEDE ET DISPOSITIF POUR VERIFIER LE RACCORDEMENT D'UNE TENSION D'ALIMENTATION POSITIVE A UNE LIGNE DE RACCORDEMENT D'ABONNE COMPRENANT PLUSIEURS FILS

(30) Priorität: 30.06.2005 DE 102005030598
(43) Veröffentlichungstag der Anmeldung: 19.03.2008
(73) Patentinhaber: Nokia Solutions and Networks GmbH & Co. KG, 81541 Munich (DE)
(72) Erfinder: DIEGEL, Heike, 82393 Iffeldorf (DE); DOLLINGER, Rudolf, 81243 München (DE); KRIMMER, Roland, 82110 Germering (DE); SIEBEN, Bernhard, 82061 Neuried (DE)
(74) Vertreter: Weidel, Gottfried
(86) Internationale Anmeldenummer: PCT/EP2006/063211
(87) Internationale Veröffentlichungsnummer: WO 2007/003492

(56) Entgegenhaltungen:
- EP-A- 0 543 161
- DE-A1- 3 500 848

## Beschreibung

Die Erfindung betrifft ein Verfahren und eine Einrichtung zur Überprüfung des Zuschaltens einer positiven Versorgungsspannung auf eine mehrere Adern umfassende Teilnehmeranschlussleitung zum Anschluss zumindest eines Teilnehmers an zumindest ein Kommunikationsnetz.

Die Betreiber von Kommunikationsnetzen wie beispielsweise dem herkömmlichen Telefonnetz bzw. Fernsprechnetz stellen den Teilnehmern oder Kunden neben der Nutzdatenübermittlung (im Telefonnetz: der Sprache) oftmals eine Vielzahl an weiteren Leistungen bzw. Teilnehmerleistungsmerkmalen zur Verfügung. Zu diesen Leistungen gehören z.B. Konferenzschaltungen, die Übertragung bzw. Unterdrückung von Rufnummern, die Anrufweiterleitung oder der Gebührenimpuls.

Bei Beschwerden der Teilnehmer oder auch bei einer routinemäßigen Überprüfung oder Kontrolle dieser zugesicherten Leistungen müssen unter anderem die Eigenschaften der Teilnehmeranschlussschaltung (SLIC - "subscriber line interface circuit") sowie der Teilnehmeranschlussleitung vom Betreiber des Fernsprechnetzes überprüft werden. Die Teilnehmeranschlussleitung verbindet zumindest ein Endgerät des entsprechenden Teilnehmers mit der zugehörigen Teilnehmeranschlussschaltung der Vermittlungsstelle.

Bei einer derartigen Überprüfung der Eigenschaften der Teilnehmeranschlussleitung sollten angeschlossene Endgeräte jedoch nicht ansprechen, d.h. es sollte beispielsweise kein Rufsignal generiert werden.

Einer der Tests bei einer solchen Überprüfung ist die Untersuchung des Verhaltens der Teilnehmeranschlussschaltung sowie der damit verbundenen Teilnehmeranschlussleitung beim Zuschalten einer positiven Versorgungsspannung.

Gängige, dem Stand der Technik zuzuordnende Testverfahren benötigen dazu nachteilig eine externe Testeinheit oder Messeinrichtung. Diese wird an die entsprechende Teilnehmeranschlussbaugruppe angeschlossen und anschließend wird mittels dieser Messeinrichtung die positive Rufspannung gemessen. Wird durch die Rufspannung ein bestimmter Schwellenwert nicht erreicht, so kann daraus auf ein Fehlen der positiven Versorgungsspannung geschlossen werden. Um zu verhindern, dass das entsprechende Endgerät des angeschlossenen Teilnehmers auf die Rufspannung reagiert, muss zusätzlich die Teilnehmeranschlussleitung des Teilnehmers während des Testvorgangs von der Vermittlungsstelle abgekoppelt werden.

**Ein Beispiel eines Verfahrens zum Messen von Operations- oder Betriebsparametern einer Schnittstellenschaltung und einer mit dieser verbundenen Telefon-Teilnehmerleitung, bei dem der Teilnehmer während des Testvorgangs abgekoppelt wird, ist in** EP0543161A2 **angegeben.**

**Ein anderes Verfahren zum Prüfen der Funktionsfähigkeit von Anschlussschaltungen eines Telekommunikationsnetzes, bei dem die Prüfung im laufenden Betrieb bewerkstelligt werden kann, wird beispielsweise in der deutschen Offenlegungsscchrift** DE3500848A1 **erläutert.**

Der Erfindung liegt die Aufgabe zugrunde, das Verfahren zur Überprüfung des Zuschaltens einer positiven Versorgungsspannung auf eine Teilnehmeranschlussleitung zu verbessern.

Diese Aufgabe wird ausgehend von einem Verfahren gemäß den Merkmalen des Patentanspruchs 1 sowie ausgehend von einer Einrichtung gemäß den Merkmalen des Patentanspruchs 5 gelöst.

Beim erfindungsgemäßen Verfahren zur Überprüfung des Zuschaltens einer Versorgungsspannung auf eine mehrere Adern umfassende Teilnehmeranschlussleitung zum Anschluss zumindest einen Teilnehmers an zumindest ein Kommunikationsnetz wird zwischen zwei Adern (a, b) der Teilnehmeranschlussleitung (TAL) eine Impedanz (I) geschaltet, die Teilnehmeranschlussleitung **(TAL) in einen Rufpause-Modus geschaltet und der auf** den A**dern (a, b) der Teilnehmeranschlussleitung (TAL)** fließende **Strom und/oder die Spannung einer Ader (b) gegen Erde** be**stimmt.**

**Der wesentliche Vorteil der Erfindung liegt darin, dass** die **Überprüfung des Zuschaltens der Versorgungsspannung** ohne eine externe Messeinrichtung erfolgen kann.

Vorteilhaft wird die Überprüfung dabei von einer der Teilnehmeranschlussleitung zugeordneten Teilnehmeranschlussbaugruppe durchgeführt - Anspruch 2.

Weitere vorteilhafte Ausführungsformen sowie eine Einrichtung zur Überprüfung des Zuschaltens einer Versorgungsspannung auf eine mehrere Adern umfassende Teilnehmeranschlussleitung zum Anschluss zumindest eines Teilnehmers an zumindest ein Kommunikationsnetz sind den weiteren Ansprüchen zu entnehmen.

Im Folgenden wird die Erfindung mit Hilfe der beigefügten Zeichnung detaillierter erläutert.

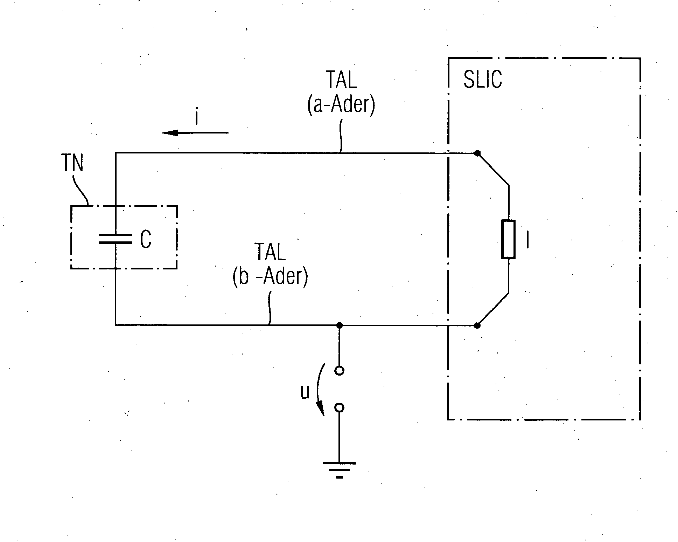

Fig. 1 zeigt den prinzipiellen, schematischen Aufbau eines in einem Kommunikationsnetz angeordneten Teilnehmeranschlusses, welche in diesem Ausführungsbeispiel als analoger Teilnehmeranschluss eines Fernsprech- bzw. Telefonnetzes ausgestaltet ist, sowie eine zur Durchführung des erfindungsgemäßen Verfahrens zugeschaltete Testimpedanz.

Gemäß einer beispielhaften Anwendung des erfindungsgemäßen Verfahrens wird in einem zweistufigen Test untersucht, ob zum einen die Teilnehmeranschlussschaltung funktionstüchtig ist, d.h. durch diese die auf der Teilnehmeranschlussleitung erforderliche (z.B. positive) Versorgungsspannung bereitgestellt werden kann. Zum anderen wird untersucht, ob die von der Teilnehmeranschlussschaltung erzeugte Versorgungsspannung auch tatsächlich an der Teilnehmeranschlussleitung anliegt.

In Fig. 1 ist ein Teilnehmer TN über die entsprechende Teilnehmeranschlussleitung TAL mit einer der Vermittlungseinrichtung (nicht dargestellt) zugeordneten Teilnehmeranschlussschaltung SLIC verbunden. Die Anschlussleitung TAL selbst besteht üblicherweise aus herkömmlichen Kupfer-Doppeladern, wobei die beiden Anschlüsse als a-Ader bzw. b-Ader bezeichnet werden. Des Weiteren befindet sich die Teilnehmeranschlussschaltung SLIC üblicherweise auf einer so genannten Teilnehmeranschlussbaugruppe (SLMA - "subscriber line module analogue", nicht dargestellt).

Das teilnehmerseitig an die Teilnehmeranschlussleitung TAL angeschlossene Endgerät (nicht dargestellt) eines Teilnehmers TN entspricht schaltungstechnisch einer zwischen die Enden der a-Ader und der b-Ader geschalteten Kapazität C. Diese Kapazität C wird auch als Wecker-Kapazität bezeichnet, da es sich dabei um diejenige Komponente des Endgeräts handelt, welche die von der Vermittlungsstelle bei einem ankommenden Anruf auf die Teilnehmeranschlussleitung TAL angelegte Wechselspannung erfasst und somit den ankommenden Anruf erkennt.

Des Weiteren ist in Fig. 1 eine Impedanz I dargestellt, welche bei der Durchführung des erfindungsgemäßen Verfahrens zwischen die beiden Adern a und b der Teilnehmeranschlussleitung geschaltet wird. Diese Impedanz kann entweder extern angeordnet oder auch Teil der Teilnehmeranschlussbaugruppe SLMA (nicht dargestellt) sein.

Beispielhaft wird nun zu Beginn des erfindungsgemäßen Verfahrens die zu überprüfende Teilnehmeranschlussleitung TAL in den so genannten "Rufpause"- oder "boost"-Modus geschaltet. In diesem Modus liegt an der Teilnehmeranschlussleitung TAL lediglich der Gleichstromanteil der durch die Teilnehmeranschlussbaugruppe bzw. Vermittlungseinrichtung erzeugten Rufspannung an. Dieser Rufpause-Zustand ist normalerweise jener Zustand, der sich im normalen Betrieb des Fernsprechnetzes auf einer Teilnehmeranschlussleitung TAL zwischen zwei aufeinander folgenden Rufsignalen (d.h. beispielsweise zwischen zwei aufeinander folgenden Klingetönen), ergibt.

Mit Hilfe eines geeigneten Messgeräts, das vorteilhaft auf der Teilnehmeranschlussbaugruppe SLMA angeordnet sein kann, wird anschließend der über die a- und die b-Ader fließende Strom i gemessen. Mittels dieses ersten Messschritts wird verifiziert, ob die Teilnehmeranschlussschaltung SLIC grundsätzlich in der Lage ist, während des Rufpause-Modus die Teilnehmeranschlussleitung TAL mit einem vorgebbaren Strom zu speisen.

In einem zweiten Schritt wird beispielsweise die Spannung u der b-Ader gegen Erde bestimmt. Auch diese Messung kann vorteilhaft durch ein auf der Teilnehmeranschlussbaugruppe SLMA angeordnetes Messgerät (nicht dargestellt) durchgeführt werden. Durch die Bestimmung der Spannung u zwischen der Ader b der Teilnehmeranschlussleitung TAL und Erde kann anschließend überprüft werden, ob der Rufpause-Modus auch tatsächlich eingeschaltet wurde - d.h. es wird überprüft, ob die vorgegebene Gleichspannung an der Teilnehmeranschlussleitung anliegt, d.h. die Teilnehmeranschlussschaltung SLIC fehlerfrei in den Rufpause-Modus geschaltet ist.

Im Vergleich zu den aus dem Stand der Technik hervorgehenden Verfahren zur Überprüfung des Zuschaltens der positiven Versorgungsspannung auf die Teilnehmeranschlussleitung kann bei dem erfindungsgemäßen Verfahren unter anderem wie oben erwähnt das externe Messgerät entfallen. Des Weiteren sorgt das erfindungsgemäße Verfahren vorteilhaft für eine höhere Zuverlässigkeit der Überprüfung sowie für eine Kostenersparnis im Vergleich zu herkömmlichen Verfahren.

## Patentansprüche

1. Verfahren zur Überprüfung des Zuschaltens einer Versorgungsspannung auf eine mehrere Adern umfassende Teilnehmeranschlussleitung (TAL) zum Anschluss zumindest eines Teilnehmers (TN) an zumindest ein Kommunikationsnetz, wobei
- zwischen zwei Adern (a, b) der Teilnehmeranschlussleitung (TAL) eine Impedanz (I) geschaltet wird, und
- der auf den Adern (a, b) der Teilnehmeranschlussleitung (TAL) fließende Strom und/oder die Spannung einer der Adern (b) gegen Erde bestimmt werden,
**dadurch gekennzeichnet,**
**dass** zur Überprüfung die Teilnehmeranschlussleitung (TAL) in einen Rufpause-Modus geschaltet wird, in dem an der Teilnehmeranschlussleitung (TAL) lediglich ein Gleichstromanteil einer Rufspannung anliegt.

2. Verfahren nach Anspruch 1,
**dadurch gekennzeichnet,**
**dass** die Überprüfung von einer der Teilnehmeranschlussleitung (TAL) zugeordneten Teilnehmeranschlussbaugruppe.durchgeführt wird.

3. Verfahren nach Anspruch 1 oder 2,
**dadurch gekennzeichnet,**
**dass** die Impedanz (I) auf einer der Teilnehmeranschlussschaltung (SLIC) zugeordneten Teilnehmeranschlussbaugruppe angeordnet ist.

4. Verfahren nach Anspruch 1 oder 2,
**dadurch gekennzeichnet,**
**dass** die Impedanz (I) extern angeordnet ist.

5. Einrichtung zur Überprüfung des Zuschaltens einer Versorgungsspannung auf eine mehrere Adern umfassende Teilnehmeranschlussleitung (TAL) zum Anschluss zumindest eines Teilnehmers (TN) an zumindest ein Kommunikationsnetz mit Mitteln zum
- Schalten einer Impedanz (I) zwischen zwei Adern (a, b) der Teilnehmeranschlussleitung (TAL), und
- Bestimmen des auf den Adern (a, b) der Teilnehmeranschlussleitung (TAL) fließenden Stroms und/oder der Spannung einer Ader (b) gegen Erde,
**dadurch gekennzeichnet,**
**dass** die Einrichtung Mittel umfasst zum Schalten der Teilnehmeranschlussleitung (TAL) zur Überprüfung in einen Rufpause-Modus, in dem an der Teilnehmeranschlussleitung (TAL) lediglich ein Gleichstromanteil einer Rufspannung anliegt.

6. Einrichtung nach Anspruch 5,
**dadurch gekennzeichnet,**
**dass** die Mittel zur Überprüfung auf einer der Teilnehmeranschlussleitung (TAL) zugeordneten Teilnehmeranschlussbaugruppe angeordnet sind.

## Claims

1. Method for checking the connection of a supply voltage to a subscriber access line (TAL) which has a plurality of wires, for connection of at least one subscriber (TN) to at least one communication network, in which
- an impedance (I) is connected between two wires (a, b) of the subscriber access line (TAL), and
- the current flowing in the wires (a, b) of the subscriber access line (TAL) and/or the voltage between one of the wires (b) and ground are/is determined,
**characterized**
**in that** the subscriber access line (TAL) is switched to a call pause mode for checking, in which only a direct-current component of a ringing voltage is applied to the subscriber access line (TAL).

2. Method according to Claim 1,
**characterized**
**in that** the check is carried out by a subscriber line module analogue associated with the subscriber access line (TAL).

3. Method according to Claim 1 or 2,
**characterized**
**in that** the impedance (I) is arranged on a subscriber line module analogue associated with the subscriber line interface circuit (SLIC).

4. Method according to Claim 1 or 2,
**characterized**
**in that** the impedance (I) is arranged externally.

5. Device for checking the connection of a supply voltage to a subscriber access line (TAL) which has a plurality of wires for connection of at least one subscriber (TN) to at least one communication network having means for
- connecting an impedance (I) between two wires (a, b) of the subscriber access line (TAL), and
- determining the current flowing in the wires (a, b) of the subscriber access line (TAL) and/or the voltage between one of the wires (b) and ground,
**characterized**
**in that** the device comprises means for switching the subscriber access line (TAL) to a call pause mode for checking, in which only a direct-current component of a ringing voltage is applied to the subscriber access line (TAL).

6. Device according to Claim 5,
**characterized**
**in that** the means for checking are arranged on a subscriber line module analogue associated with the subscriber access line (TAL).

## Revendications

1. Procédé pour vérifier le raccordement d'une tension d'alimentation à une ligne de raccordement d'abonnés (TAL) comprenant plusieurs fils pour raccorder au moins un abonné (TN) à au moins un réseau de communication,
- une impédance (I) étant connectée entre deux fils (a, b) de la ligne de raccordement d'abonnés (TAL) et
- le courant qui passe par les fils (a, b) de la ligne de raccordement d'abonnés (TAL) et/ou la tension de l'un des fils (b) par rapport à la terre étant déterminés,
**caractérisé en ce que**, aux fins de la vérification, la ligne de raccordement d'abonnés (TAL) est commutée sur un mode de pause d'appel dans lequel uniquement une fraction de courant continu d'une tension d'appel est appliquée à la ligne de raccordement d'abonnés (TAL).

2. Procédé selon la revendication 1, **caractérisé en ce que** la vérification est effectuée par un module de raccordement d'abonnés associé à la ligne de raccordement d'abonnés (TAL).

3. Procédé selon la revendication 1 ou 2, **caractérisé en ce que** l'impédance (I) se situe sur un module de raccordement d'abonnés associé au circuit de raccordement d'abonnés (SLIC).

4. Procédé selon la revendication 1 ou 2, **caractérisé en ce que** l'impédance (I) se situe à l'extérieur.

5. Dispositif pour vérifier le raccordement d'une tension d'alimentation à une ligne de raccordement d'abonnés (TAL) comprenant plusieurs fils pour raccorder au moins un abonné (TN) à au moins un réseau de communication, comportant des moyens pour :
- connecter une impédance (I) entre deux fils (a, b) de la ligne de raccordement d'abonnés (TAL) et
- déterminer le courant qui passe par les fils (a, b) de la ligne de raccordement d'abonnés (TAL) et/ou la tension d'un fil (b) par rapport à la terre,
**caractérisé en ce que** le dispositif comprend des moyens pour commuter, aux fins de la vérification, la ligne de raccordement d'abonnés (TAL) sur un mode de pause d'appel dans lequel uniquement une fraction de courant continu d'une tension d'appel est appliquée à la ligne de raccordement d'abonnés (TAL).

6. Dispositif selon la revendication 5, **caractérisé en ce que** les moyens de vérification sont agencés sur un moule de raccordement d'abonnés associé à la ligne de raccordement d'abonnés (TAL).
